# EUROPEAN PATENT APPLICATION

(11) **EP 2 040 083 A2**
(43) Date of publication of application: **25.03.2009**
(21) Application number: 08015553.4
(22) Date of filing: 03.09.2008
(51) Int. Cl.: G01N 35/10, G01F 23/74, G01N 35/00

(54) **Specimen analyzer and liquid suction assembly**

(30) Priority: 19.09.2007 JP 2007243075
(71) Applicant: SYSMEX CORPORATION, Kobe-shi, Hyogo 651-0073 (JP)
(72) Inventor: Sento, Masayasu, Kobe-shi Hyogo 651-0073 (JP); Ikeda, Masayuki, Kobe-shi Hyogo 651-0073 (JP); Nishida, Tomoyuki, Kobe-shi Hyogo 651-0073 (JP); Wakamiya, Yuji, Kobe-shi Hyogo 651-0073 (JP)
(74) Representative: HOFFMANN EITLE

(57) **Abstract**

A specimen analyzer, comprising: a liquid suction assembly; a measurement section for measuring a specimen; and a connection section for connecting the liquid suction assembly and the measurement section, wherein the liquid suction assembly comprises: a suction nozzle, disposed inside a liquid container storing liquid used for measurement of the specimen, for sucking the liquid in the liquid container; a fluid volume sensor for detecting whether a predetermined volume of the liquid remains in the liquid container; and a notice section for notifying that the liquid in the liquid container is smaller than the predetermined volume, is disclosed. A liquid suction assembly is also disclosed.

## Description

### FIELD OF THE INVENTION

The present invention relates to a specimen analyzer and a liquid suction assembly.

### BACKGROUND

Generally, a specimen analyzer, such as a blood analyzer and an immune analyzer,' is provided with a nozzle section that dispenses or sucks a specimen or a reagent. In order to prevent contamination of the reagent, the nozzle section is cleaned each time a dispensing or suction operation is performed. Also, a cleaning solution used for cleaning and a reagent used for specimen analysis are stored in liquid containers.

There has been a liquid suction device for specimen analysis configured to suck in a cleaning solution to be supplied to a specimen analyzer from a liquid container (see, for example, JP-A-2005-283246).

JP-A-2005-283246 discloses a nozzle cleaning device provided with a cleaning solution suction section (liquid suction device for specimen analysis) which is configured to suck in a cleaning solution to be supplied to a cleaning bath for cleaning a nozzle section from a cleaning solution tank (liquid container).

However, in the cleaning solution suction section disclosed in JP-A-2005-283246, there is a problem in that upon identifying a remaining volume of the cleaning solution in the cleaning solution tank, for example, a user identifies the remaining volume by observing the inside of the cleaning solution tank or identifies a weight by holding the cleaning solution tank in hand, thereby straining the user.

### SUMMARY OF THE INVENTION

The scope of the present invention is defined solely by the appended claims, and is not affected to any degree by the statements within this summary.

A first aspect of the present invention is a specimen analyzer, comprising: a liquid suction assembly; a measurement section for measuring a specimen; and a connection section for connecting the liquid suction assembly and the measurement section, wherein the liquid suction assembly comprises: a suction nozzle, disposed inside a liquid container storing liquid used for measurement of the specimen, for sucking the liquid in the liquid container; a fluid volume sensor for detecting whether a predetermined volume of the liquid remains in the liquid container; and a notice section for notifying that the liquid in the liquid container is smaller than the predetermined volume.

A second aspect of the present invention is a liquid suction assembly connected to a measurement section for measuring a specimen, comprising: a suction nozzle, disposed inside a liquid container storing liquid used for measurement of the specimen, for sucking the liquid in the liquid container; a fluid volume sensor for detecting whether a predetermined volume of the liquid remains in the liquid container; and a notice section for notifying that the liquid in the liquid container is smaller than a predetermined volume.

### BRIEF DESCRIPTION OF THE DRAWINGS

FIG. 1 is a perspective view showing the overall configuration of an immune analyzer according to one embodiment of the invention.
FIG. 2 is a block diagram including a controller in a measurement mechanism section of the immune analyzer according to one embodiment of the invention.
FIG. 3 is a block diagram showing the configuration of the controller in the measurement mechanism section shown in FIG. 2.
FIG. 4 is a block diagram showing a controller of the immune analyzer according to one embodiment of the invention.
FIG. 5 is a cross section of a cuvette processing section of the immune analyzer according to one embodiment of the invention.
FIG. 6 is a perspective view showing a cleaning solution intake section of the immune analyzer according to one embodiment of the invention.
FIG. 7 is a perspective view showing the cleaning solution intake section and a cleaning solution tank of the immune analyzer according to one embodiment of the invention.
FIG. 8 is a cross section showing the cleaning solution intake section of the immune analyzer according to one embodiment of the invention.
FIG. 9 is a view used to describe in detail the immune analyzer according to one embodiment of the invention.
FIG. 10 is another cross section showing the cleaning solution intake section of the immune analyzer according to one embodiment of the invention.
FIG. 11 is still another cross section showing the cleaning solution intake section of the immune analyzer according to one embodiment of the invention.
FIG. 12 is still another cross section showing the cleaning solution intake section of the immune analyzer according to one embodiment of the invention.
FIG. 13 is still another cross section showing the cleaning solution intake section of the immune analyzer according to one embodiment of the invention.
FIG. 14 is a channel diagram of the cleaning solution for the cuvette processing section of the immune analyzer according to one embodiment of the invention.
FIG. 15 is a flowchart used to describe a state monitor processing operation of the cleaning solution tank at the start-up of the immune analyzer according to one embodiment of the invention.
FIG. 16 is another flowchart used to describe the state monitor processing operation of the cleaning solution tank at the start-up of the immune analyzer according to one embodiment of the invention.
FIG. 17 is a view showing a reagent management screen of the immune analyzer according to one embodiment of the invention.
FIG. 18 and 19 are views used to describe in detail the immune analyzer according to one embodiment of the invention.
FIG. 20 is a view showing a reagent switch screen of the immune analyzer according to one embodiment of the invention.
FIG. 21 is another view showing the reagent management screen of the immune analyzer according to one embodiment of the invention.
FIG. 22 is still another view showing the reagent management screen of the immune analyzer according to one embodiment of the invention.
FIG. 23 is still another view showing the reagent management screen of the immune analyzer according to one embodiment of the invention.
FIG. 24 is still another flowchart used to describe the state monitor processing operation of the cleaning solution tank during analysis processing by the immune analyzer according to one embodiment of the invention.

### DETAILED DESCRIPTION OF THE PREFERRED EMBODIMENTS

The preferred embodiments of the present invention will be described hereinafter with reference to the drawings.

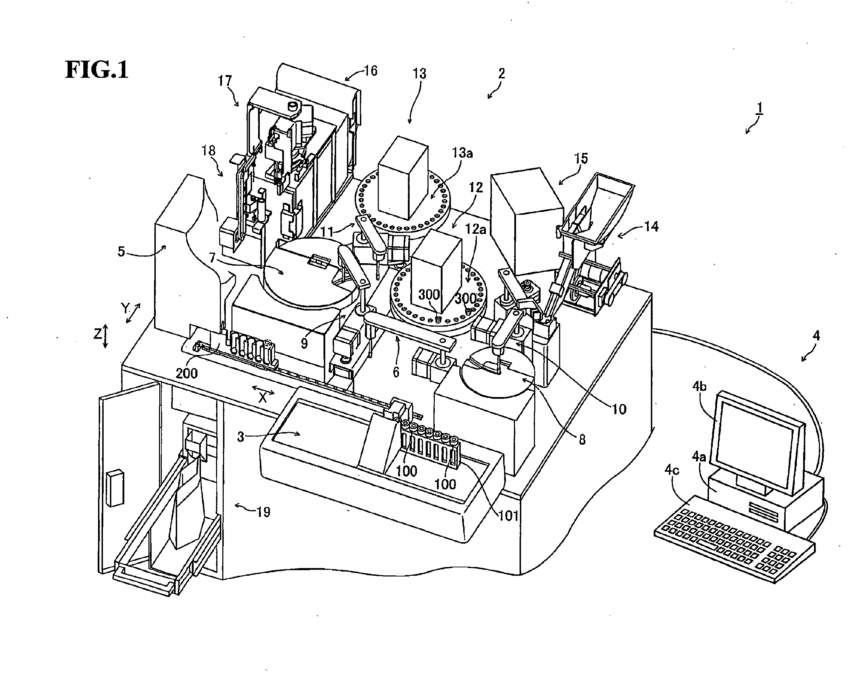

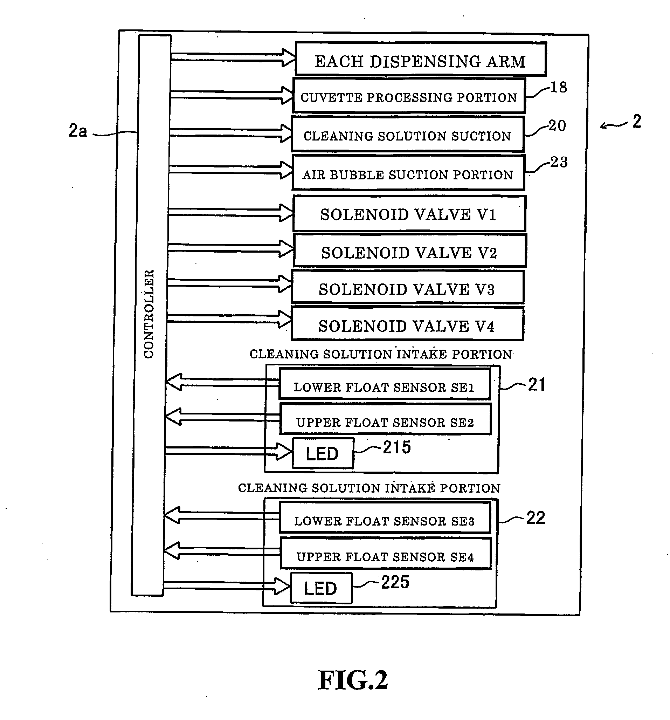

FIG. 1 is a perspective view showing the overall configuration of an immune analyzer according to one embodiment of the invention. FIG. 2 through FIG. 14 are views used to describe in detail the respective sections in the immune analyzer according to one embodiment shown in FIG. 1. Firstly, the overall configuration of an immune analyzer 1 according to one embodiment of the invention will be described with reference to FIG. 1 through FIG. 14. This embodiment will describe a case where the present invention is applied to an immune analyzer as one example of a specimen analyzer.

The immune analyzer 1 according to one embodiment of the invention is a device to check various items, including hepatitis B, hepatitis C, tumor marker, and thyroid hormone, using a specimen such as blood. According to the immune analyzer 1, magnetic particles (R2 reagent) are bound to trapped antibody (R1 reagent) bound to antigen contained in a specimen, such as blood, which is the subject to be measured. Then, bound antigen, trapped antibody, and magnetic particles are attracted to a magnet (not shown) in a BF (Bound Free) separation section 15 (see FIG. 1) to remove the R1 reagent containing free trapped antibody. Subsequently, the antigen to which the magnetic particles are bound and labeled antibody (R3 reagent) are bound, after which bound magnetic particles, antigen, and labeled antibody are attracted to the magnet in the BF separation section 15 to remove the R3 reagent containing free labeled antibody. Further, after addition of a buffer solution (R4 reagent) and a luminous substrate (R5 reagent) that emits light in the reaction process with the labeled antibody, an amount of light emitted by the reaction between the labeled antibody and the luminous substrate is measured. Through the processes described above, the antigen contained in the specimen bound to the labeled antibody is measured quantitatively.

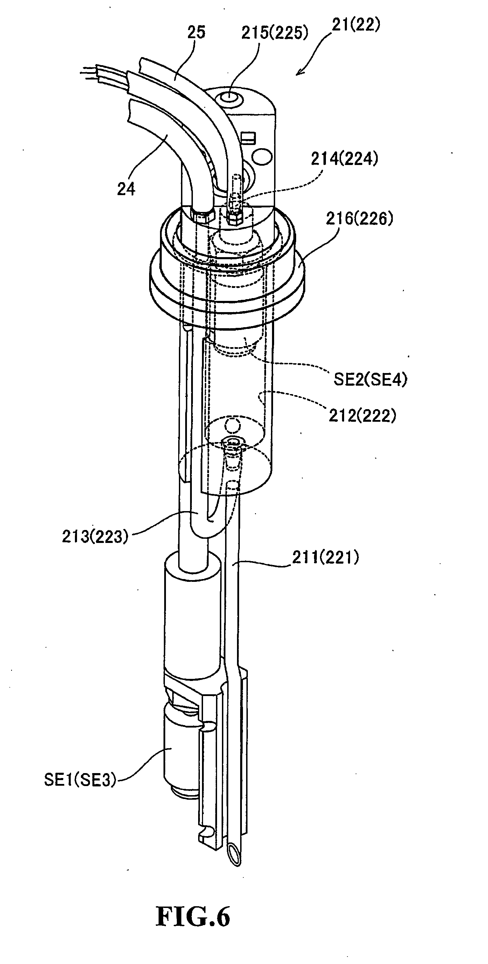

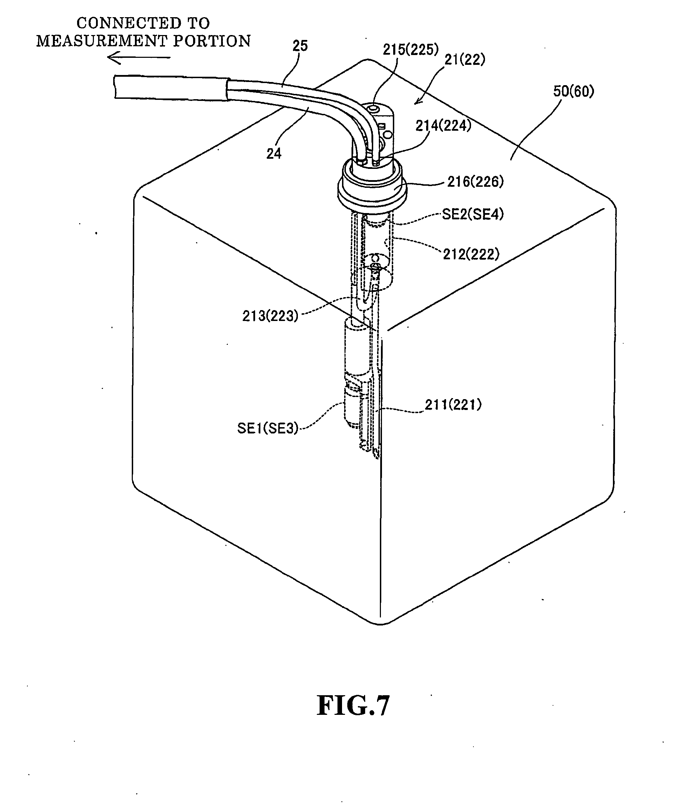

As is shown in FIG. 1, the immune analyzer 1 includes a measurement mechanism section 2, a sample transfer unit 3 disposed on the front face side of the measurement mechanism section 2, and a control device 4 formed of a PC (personal computer) electrically connected to the measurement mechanism section 2. The measurement mechanism section 2 includes a pipette tip supply device 5, a specimen dispensing arm 6, reagent placement sections 7 and 8, reagent dispensing arms 9, 10, and 11, a primary reaction section 12, and a secondary reaction section 13, a cuvette supply section 14, a BF separation section 15, a detection section 16, a cuvette transportation section 17 disposed on the top face of the detection section 16, a cuvette processing section 18, and a cuvette disposal section 19. Further, the measurement mechanism section 2 includes a cleaning solution suction section 20 (see FIG. 2) that sucks in a cleaning solution from a first tank 50 and a second tank 60 of a cleaning solution (see FIG. 7) each storing a cleaning solution used at the respective sections in the measurement mechanism section 2, cleaning solution intake sections 21 and 22 (see FIG. 6) that take the cleaning solution into cleaning solution channels, respectively, from the first tank 50 and the second tank 60 by suction induced by the cleaning solution suction section 20, and an air bubble suction section 23 (see FIG. 2) that removes air inside the cleaning solution intake sections 21 and 22.

Also, as is shown in FIG. 2, the respective mechanisms (each dispensing arm, the cuvette processing section 18, the cleaning solution suction section 20, the cleaning solution intake sections 21 and 22, the air bubble suction section 23) in the measurement mechanism section 2 are controlled by a controller 2a provided to the measurement mechanism section 2. In addition, the controller 2a is configured so as to control operations of solenoid valves V1 through 4 provided on the channels of the cleaning solution.

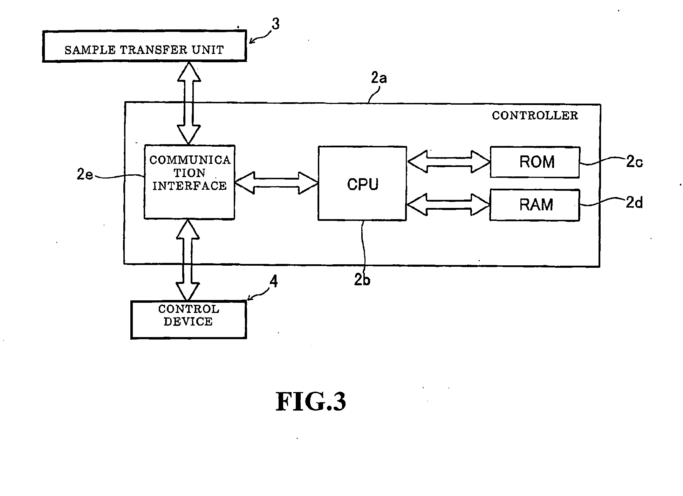

As is shown in FIG. 3, the controller 2a is chiefly formed of a CPU 2b, a ROM 2c, a RAM 2d, and a communication interface 2e. The configuration of the controller 2a will be described in detail below.

The CPU 2b is capable of running a computer program pre-stored in the ROM 2c and a computer program read onto the RAM 2d. The ROM 2c has stored therein computer programs to be run on the CPU 2b and data used to run the computer programs. The RAM 2d is used to read out the computer programs pre-stored in the ROM 2c. It is also used as a work area for the CPU 2b when these computer programs are run.

The communication interface 2e is connected to the control device 4 and performs the function of transmitting optical information of a specimen (data about an amount of light emitted by the reaction between the labeled antibody and the luminous substrate) to the control device 4 and receiving a signal from a controller 4a of the control device 4. Also, the communication interface 2e is furnished with the function of transmitting instructions from the CPU 2b to drive the respective sections in the sample transfer unit 3 and the measurement mechanism section 2.

As is shown in FIG. 1, the sample transfer unit 3 is configured to transport a rack 101 on which are mounted plural test tubes 100 each storing a specimen to a position corresponding to a predetermined suction position at which the specimen dispensing arm 6 sucks in the specimen.

The control device 4 (see FIG. 1) is formed of a personal computer (PC) or the like, and includes the controller 4a formed of a CPU, a ROM, a RAM and so forth, a display section 4b, and a keyboard 4c. The display section 4b is provided to display an analysis result obtained through analysis on the data of a digital signal transmitted from the detection section 16.

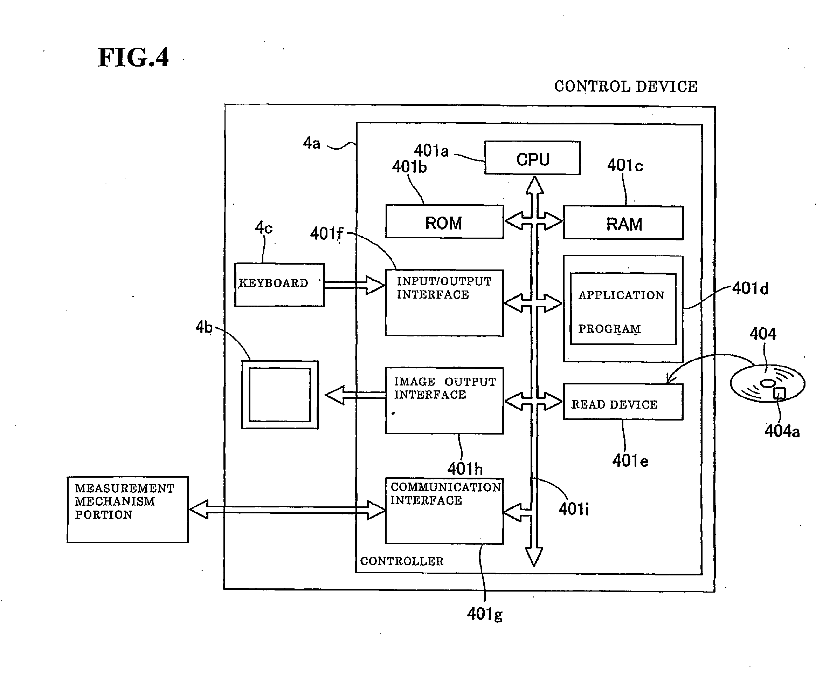

The configuration of the control device 4 will now be described. As is shown in FIG. 4, the control device 4 is formed of a computer 401 chiefly composed of the controller 4a, the display section 4b, and the keyboard 4c. The controller 4a is chiefly formed of a CPU 401a, a ROM 401b, a RAM 401c, a hard disk 401d, a read device 401e, an input/output interface 401f, a communication interface 401g, and an image output interface 401h. The CPU 401a, the ROM 401b, the RAM 401c, the hard disk 401d, the read device 401e, the input/output interface 401f, the communication interface 401g, and the image output interface 401h are interconnected via a bus 401i.

The CPU 401a is capable of running a computer program pre-stored in the ROM 401b and a computer program loaded in the RAM 401c. The computer 401 functions as the control device 4 by running an application program 404a described below on the CPU 401a.

The ROM 401b is formed of a mask ROM, a PROM, an EPROM, an EEPROM, or the like, and has recorded therein a computer program run on the CPU 401a and data used for the computer program.

The RAM 401c is formed of an SRAM or a DRAM. The RAM 401c is used to read out the computer programs pre-recorded in the ROM 401b and the hard disk 401d. It is also used as a work area for the CPU 401a when these computer programs are run.

Various computer programs to be run on the CPU 401a, such as the operating system and the application programs, and data used to run these computer programs are pre-installed in the hard disc 401d. An application program 404a for immunoanalysis of this embodiment is also pre-installed in the hard disk 401d.

The read device 401e is formed of a flexible disk drive, a CD-ROM drive, a DVD-ROM drive, or the like, and is capable of reading out a computer program or data recorded in a portable recording medium 404. The application program 404a for immunoanalysis is stored in the portable recording medium 404. The computer 401 is capable of reading out the application program 404a from the portable recording medium 404 to install the application program 404a in the hard disk 401d.

Besides being provided by means of the portable recording medium 404, the application program 404a may be provided via an electric communication line (wired or wireless) from an external device connected to the computer 401 by the electric communication line to enable communications. For example, in a case where the application program 404a is stored in the hard disk of a server computer on the Internet, then the computer 401 is allowed to access the server computer and download the application program 404a to install this program in the hard disk 401d.

In addition, the operating system that provides the graphical user interface environment, for example, Windows (registered trademark) manufactured and sold by Microsoft Corporation, is pre-installed in the hard disk 401d. Hereinafter, assume that the application program 404a operates on this operating system.

The input/output interface 401f is formed, for example, of a serial interface, such as USB, IEEE1394, and RS-232C, a parallel interface, such as SCSI, IDE, and IEEE1284, an analog interface formed of a digital-to-analog converter and an analog-to-digital converter, or the like. The keyboard 4c is connected to the input/output interface 401f, and the user can input data into the computer 401 with the use of the keyboard 4c.

The communication interface 401g is, for example, an Ethernet (registered trademark) interface. The communication interface 401g enables the computer 401 to transmit data to and receive data from the measurement mechanism section 2 using a predetermined communication protocol.

The image output interface 401h is connected to the display section 4b formed of an LCD or a CRT, and is configured to output a video signal corresponding to the image data provided from the CPU 401a to the display section 4b. The display section 4b displays an image (screen) according to the video signal inputted therein. In addition, it is configured in such a manner that image data according to a signal from the measurement mechanism section 2 transmitted via the communication interface 401g is also transmitted from the CPU 401a to the image output interface 401h.

The application program 404a for immunoanalysis pre-installed in the hard disk 401d of the controller 4a is run to measure an amount of antigen in a measurement sample using an amount of light emission (data of the digital signal) of the measurement sample transmitted from the detection section 16 of the measurement mechanism section 2.

As is shown in FIG. 1, the pipette tip supply device 5 is furnished with the function of mounting pipette tips (not shown) one by one onto an emergency specimen and tip transportation rack 200.

The specimen dispensing arm 6 is furnished with the function of dispensing the specimens inside the test tubes 100 transported to the predetermined suction position by the sample transfer unit 3 into cuvettes 300 in the primary reaction section 12 described below.

The reagent placement section 7 is provided to place thereon a reagent container in which to store the R1 reagent containing the trapped antibody and a reagent container in which to store the R3 reagent containing the labeled antibody.

The reagent placement section 8 is provided to place thereon a reagent container in which to store the R2 reagent containing the magnetic particles.

The reagent dispensing arm 9 is furnished with the function of sucking in the R1 reagent placed on the reagent placement section 7 and dispensing the sucked R1 reagent into the cuvettes 300 in the primary reaction section 12 in which the specimen has been dispensed.

The reagent dispensing arm 10 is furnished with the function of dispensing the R2 reagent placed on the reagent placement section 8 into the cuvettes 300 in the primary reaction section 12 in which the specimen and the R1 reagent have been dispensed.

The reagent dispensing arm 11 is furnished with the function of sucking in the R3 reagent placed on the reagent placement section 7 and dispensing the sucked R3 reagent into the cuvettes 300 in the secondary reaction section 13 in which the specimen, the R1 reagent, and the R2 reagent have been dispensed.

The primary reaction section 12 is provided to rotationally move the cuvettes 300 in a rotation table section 12a by a predetermined angle every predetermined period (18 seconds in this embodiment) and to stir the specimen, the R1 reagent, and the R2 reagent inside the cuvettes 300. In short, the primary reaction section 12 is provided to let a reaction between the R2 reagent having the magnetic particles and the antigen in the specimen to take place inside the cuvettes 300.

In addition, the rotation table section 12a is configured to rotationally move the cuvettes 300 by a predetermined angle every 18 seconds. Accordingly, the respective devices (the specimen dispensing arm 6, the reagent dispensing arms 9 and 10, and so forth) of the immune analyzer 1 are controlled to operate with respect to the cuvettes 300 moved to the predetermined position at timing at which the cuvettes 300 are moved to the predetermined position by the rotation table section 12a.

The secondary reaction section 13 is configured in the same manner as the primary reaction section 12. It is provided to rotationally move the cuvettes 300 in a rotation table section 13a by a predetermined angle every predetermined period (18 seconds in this embodiment) and also to stir the specimen, the R1 reagent, the R2 reagent, the R3 reagent, the R4 reagent, and the R5 reagent inside the cuvettes 300. In short, the secondary reaction section 13 is provided to let a reaction between the R3 reagent having the labeled antibody and the antigen in the specimen to take place and also to let a reaction between the R5 reagent having the luminescent substrate and the labeled antibody in the R3 reagent to take place inside the cuvettes 300. It is configured in such a manner that the R4 reagent and the R5 reagent are dispensed into the cuvettes 300 in the secondary reaction section 13 storing the specimen, the R1 reagent, the R2 reagent, and the R3 reagent, respectively, by an R4 reagent dispensing arm (not shown) and an R5 reagent dispensing arm (not shown) provided in the vicinity of the secondary reaction section 13.

The cuvette supply section 14 is configured so that it is capable of supplying plural cuvettes 300 successively to the rotation table section 12a of the primary reaction section 12.

The BF separation section 15 is furnished with the function of separating the free R1 reagent (unwanted component) and the magnetic particles from the sample insides the cuvettes 300 transported from the primary reaction section 12 and the function of separating the free R3 reagent (unwanted component) and the magnetic particles from the sample inside the cuvettes 300 transported from the secondary reaction section 13.

The detection section 16 is provided to measure an amount of the antigen contained in the specimen by obtaining light emitted in the reaction process between the labeled antibody bound to the antigen in the specimen to which predetermined processing has been applied and the luminous substrate using a photo multiplier tube. The detection section 16 includes a placement section (not shown) to place thereon the cuvettes 300 storing the specimen, the R1 reagent, the R2 reagent, the R3 reagent, the R4 reagent, and the R5 reagent. The detection section 16 is configured in such a manner that light from the outside will not go incident on the cuvettes 300 placed in the placement section provided inside during the measurement.

The cuvette transportation section 17 is provided on the top face of the detection section 16. It is configured to transport the cuvettes 300 from the detection section 16 to a predetermined position in the cuvette processing section 18 after the measurement and also to transport the cuvettes 300 from the predetermined position in the cuvette processing section 18 to a predetermined position in the cuvette disposal section 19.

The cuvette processing section 18 is configured to suck in liquid from the cuvettes 300 transported to the predetermined position by the cuvette transportation section 17 and storing the specimen, the R1 reagent, the R2 reagent, the R3 reagent, the R4 reagent, and the R5 reagent.

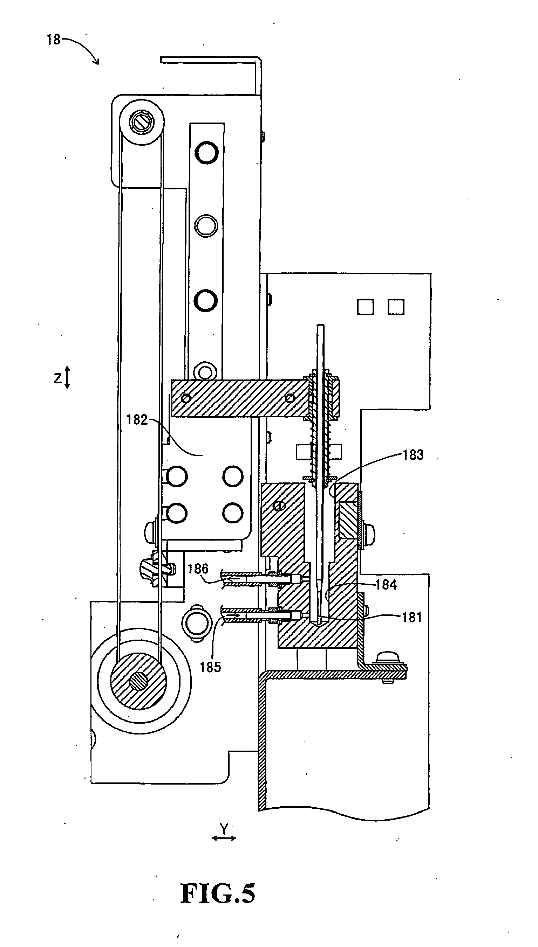

Also, as is shown in FIG. 5, the cuvette processing section 18 includes a nozzle 181 that sucks in the liquid inside the cuvettes 300, a nozzle drive section 182 that moves the nozzle 181 in the vertical direction, a holding section 183 that holds the cuvettes 300 when the liquid inside the cuvettes 300 is sucked in, a cleaning section 184 into which a cleaning solution is injected, an injection section 185 that injects the cleaning solution into the cleaning section 184, and a discharging section 186 that discharges an excessive cleaning solution from the cleaning section 184.

The nozzle 181 is configured to suck in the cleaning solution injected into the cleaning section 184 after it sucks in the liquid inside the cuvettes 300 in order to clean the channel of the sucked liquid. It is thus possible to suppress foreign matter from remaining in the channel of the liquid.

The cuvette disposal section 19 is provided to dispose the cuvettes 300 after the liquid therein is sucked in at the cuvette processing section 18.

In this embodiment, as is shown in FIG. 6, the cleaning solution intake section 21 includes an intake nozzle 211 that takes the cleaning solution in the first tank 50 of the cleaning solution into the cleaning solution intake section 21, a chamber 212 provided on the channel of the cleaning solution taken in by the intake nozzle 211, a connection tube 213 that connects the cleaning solution channel tube 24 connected to the respective sections in the measurement mechanism section 2 where the cleaning solution is used and the chamber 212, and an air bubble discharging section 214 to remove air inside the chamber 212. A lower float sensor SE1 configured to detect a fluid volume of the cleaning solution is provided in the vicinity of the lower section of the cleaning solution intake section 21. An upper float sensor SE2 configured to detect a fluid volume of the cleaning solution reserved in the chamber 212 is provided inside the chamber 212. Also, as are shown in FIG. 6 and FIG. 7, the liquid solution intake section 21 further includes an LED 215 provided on the upper end and a cap section 216 that attaches the cleaning solution intake section 21 to the first tank 50 so as to close the opening (not shown) provided at the top section of the first tank 50.

The intake nozzle 211 is formed so that the lowermost end inclines with respect to a horizontal line and it has a length long enough to abut on the bottom section of the first tank 50 while the cleaning solution intake section 21 is provided inside the first tank 50. This configuration makes it possible to take in the cleaning solution from the intake nozzle 211 even when the cleaning solution in the first tank 50 runs extremely low.

The chamber 212 and the connection tube 213 are connected to each other at the bottom section of the chamber 212. It is thus configured in such a manner that the cleaning solution alone can be taken into the connection tube 213 and no air is taken therein in a case where the chamber 212 is filled with the cleaning solution.

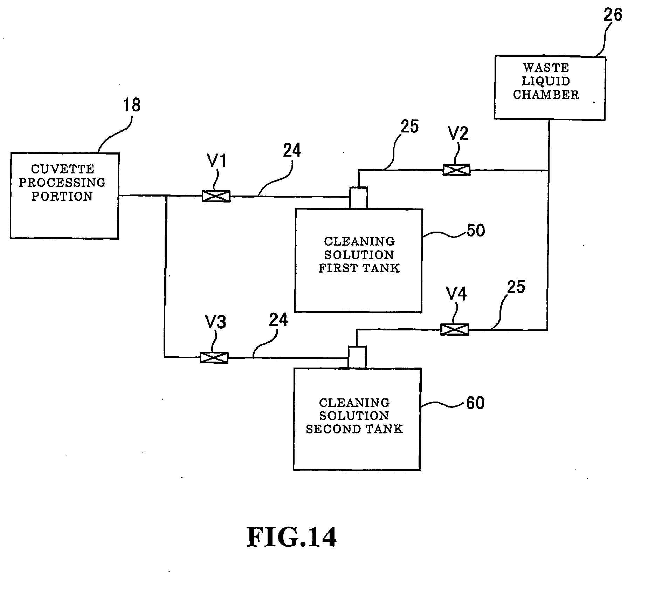

The air bubble discharging section 214 is disposed on the top face of the chamber 212. Also, a channel of air is formed so that air inside the chamber 212 to be discharged from the air bubble discharging section 214 is discharged into a waste liquid chamber 26 (see FIG. 14) described below via an air bubble channel tube 25.

A notice section 215 is configured to emit or blink three colors of light including red, green, and orange according to a signal from the control section 2a of the measurement mechanism section 2. Specifically, the notice section 215 includes a red LED capable of emitting and blinking in red and a green LED capable of emitting and blinking in green which are not shown. In a case where the notice section 215 emits/blinks red light, only the red LED is emitting/blinking, and in a case where the notice section 215 emits/blinks green light, only the green LED is emitting/blinking. In a case where the notice section 215 emits/blinks orange light, both the red LED and the green LED are emitting/blinking. The notice section 215 is provided on the upper end of the cleaning solution intake section 21 and the notice section 215 is disposed outside the first tank 50 while the cleaning solution intake section 21 is attached to the first tank 50 by the cap section 216. The user thus becomes able to confirm the display by the notice section 215 with ease.

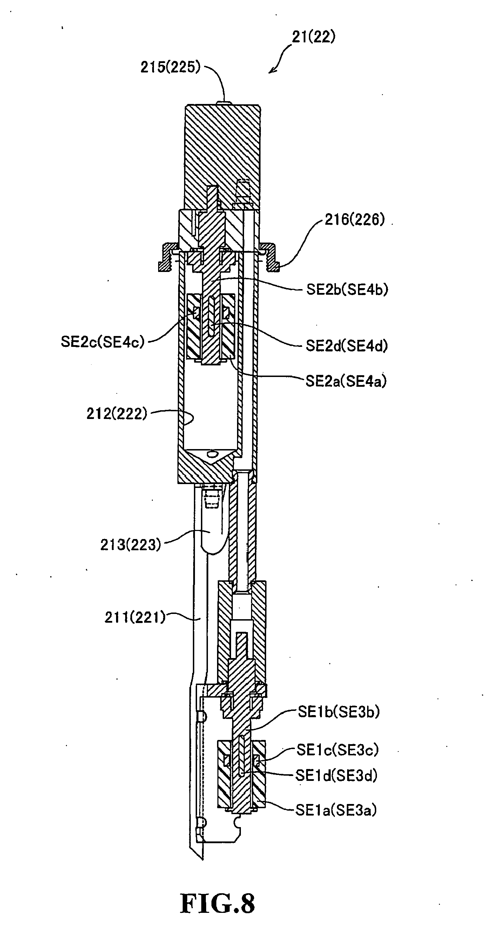

As are shown in FIG. 6 and FIG. 8, the lower float sensor SE1 includes a cylindrical float section SE1a, an axis section SE1b disposed inside the inner peripheral section of the float section SE1a, a magnet SE1c provided to the float section SE1a, and a lead switch SE1d provided inside the axis section SE1b. The float section SE1a is configured to move in the vertical direction along the axis section SE1b by buoyancy induced by liquid. The magnet SE1c is provided in the shape of a ring on the outside of the inner peripheral section of the float section SE1a. The lead switch SE1d is configured to switch between an ON state and an OFF state as the magnet SE1c moves in the vertical direction on the outside of the lead switch SE1d together with the float section SE1a. To be more concrete, it is configured in such a manner that in a case where the magnet SE1c is present on the upper side from a predetermined position with respect to the lead switch SE1d, the lead switch SE1d switches to an OFF state whereas in a case where magnet SE1c is on the lower side from the predetermined position, it switches to an ON state. More specifically, the lower float sensor SE1 is configured in such a manner that when a remaining volume of the cleaning solution in the first tank 50 reaches the minimum fluid volume of the cleaning solution (for example, 21) (hereinafter, referred to as the first fluid volume) up to which it is possible for the measurement mechanism section 2 to complete all the analyses on plural specimens in the middle of the analysis processing for which the analysis has been already started, the magnet SE1c moves to the predetermined position for the lead switch SE1d to switch from an OFF state to an ON state. The lead switch SE1d and the controller 2a are electrically connected to each other to enable the controller 2a to monitor the state of the lower float sensor SE1.

The upper float sensor SE2 is configured in the same manner as the lower float sensor SE1. To be more concrete, a float section SE2a, an axis section SE2b, a magnet SE2c, and a lead switch SE2d of the upper float sensor SE2 correspond, respectively, to the float section SE1a, the axis section SE1b, the magnet SE1c, and the lead switch SE1d of the lower float sensor SE1. The upper float sensor SE2, however, is different from the lower float sensor SE1 in the following point. The lead switch SE2d of the upper float sensor SE2 is configured to switch from an OFF state to an ON state when a remaining volume of the cleaning solution reaches a predetermined fluid volume lower than the remaining volume at which the lead switch SE1d of the lower float sensor SE1 switches from an OFF state to an ON state. To be more concrete, in a case where a remaining volume of the cleaning solution in the first tank 50 becomes so low that air is taken in together with the cleaning solution by the intake nozzle 211, a fluid volume of the cleaning solution reserved in the chamber 212 decreases gradually in response to an amount of the cleaning solution supplied to the respective sections in the measurement mechanism section 2. The upper float sensor SE2 is configured in such a manner that in a case where a remaining volume in the first tank 50 reaches the minimum volume (hereinafter, referred to as the second liquid volume) up to which air bubbles are not mixed into the liquid taken into the connection tube 213, the magnet SE2c is moved to the predetermined position and the lead switch SE2d switches from an OFF state to an ON state. The lead switch SE2d and the controller 2a are electrically connected to each other to enable the controller 2a to also monitor the state of the upper float sensor SE2.

A detailed description of the cleaning solution intake section 22 is omitted because it is of the same configuration as the cleaning solution intake section 21 described above. As are shown in FIG. 6 through FIG. 8, the respective sections 211 through 216, the lower float sensor SE1 and the upper float sensor SE2 of the cleaning solution intake section 21 correspond, respectively, to the respective sections 221 through 226, the lower float sensor SE3 and the upper float sensor SE4 of the cleaning solution intake section 22.

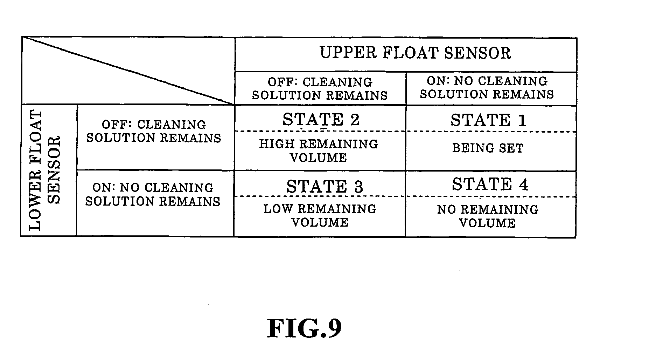

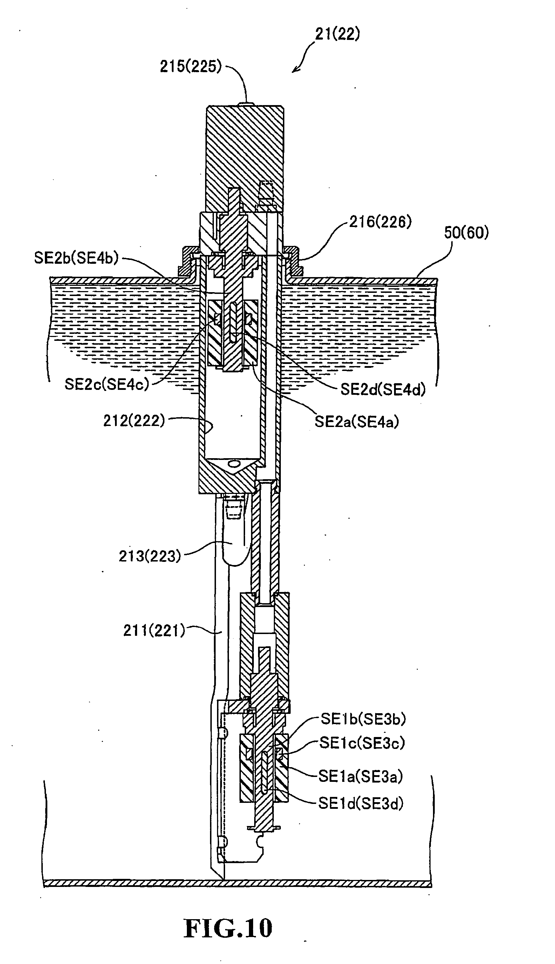

In this embodiment, the controller 2a is configured to determine a fluid volume of the cleaning solution remaining in the first tank 50 according to four statuses defined by combinations of two states, an ON state and an OFF state, of the respective lower float sensor SE1 and upper float sensor SE2 of the cleaning solution intake section 21. To be more concrete, as are shown in FIG. 9 and FIG. 10, when the cleaning solution intake section 21 is inserted inside the first tank 50, the float section SE1a of the lower float sensor SE1 is moved to the uppermost position up to which it can be moved by buoyancy of the cleaning solution, and the lower float sensor SE1 switches to an OFF state. Also, because the chamber 212 is not filled with the cleaning solution yet, the float section SE2a of the upper float sensor SE2 is moved to the lowermost position up to which it can be moved, and the upper float sensor SE2 switches to an ON state. In a case as described above where the lower float sensor SE1 configured to detect whether the fluid volume has reached the first fluid volume, which is the minimum volume up to which it is possible to complete the analyses on the specimens in the middle of analysis, is in an OFF state and the upper float sensor SE2 configured to detect whether the fluid volume has reached the second fluid volume, which is the minimum volume up to which air bubbles are not mixed into the liquid, is in an ON state, the controller 2a is configured to determine that the first tank 50 is in a state where the cleaning solution intake section 21 is being set (state 1).

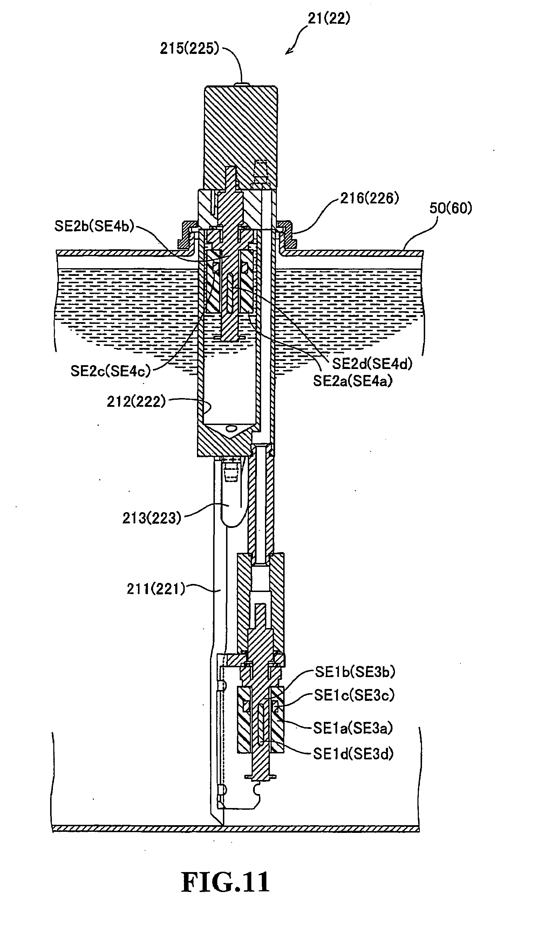

The controller 2a is configured to discharge air inside the chamber 212 into the waste liquid chamber 26 (see FIG. 14) from the air bubble discharging section 214 by controlling an air bubble removing operation so that the air bubble suction section 23 is driven while the cleaning solution intake section 21 is being set (state 1). In association with this operation, as is shown in FIG. 11, the cleaning solution is taken into the intake nozzle 211 and the cleaning solution is reserved in the chamber 212. In this instance, because the float section SE2a of the upper float sensor SE2 is moved to the uppermost position up to which it can be moved, the state of the upper float sensor SE2 switches from an ON state to an OFF state. In a case as described above where the lower float sensor SE1 configured to detect whether the fluid volume has reached the first fluid volume, which is the minimum volume up to which it is possible to complete analyses on the specimens in the middle of analysis, is in an OFF state and the upper float sensor SE2 configured to detect whether the fluid volume has reached the second fluid volume, which is the minimum volume up to which air bubbles are not mixed into the liquid, is in an OFF state, the controller 2a is configured to determine the state of the first tank 50 as a state (state 2) where the remaining volume of the cleaning solution is high.

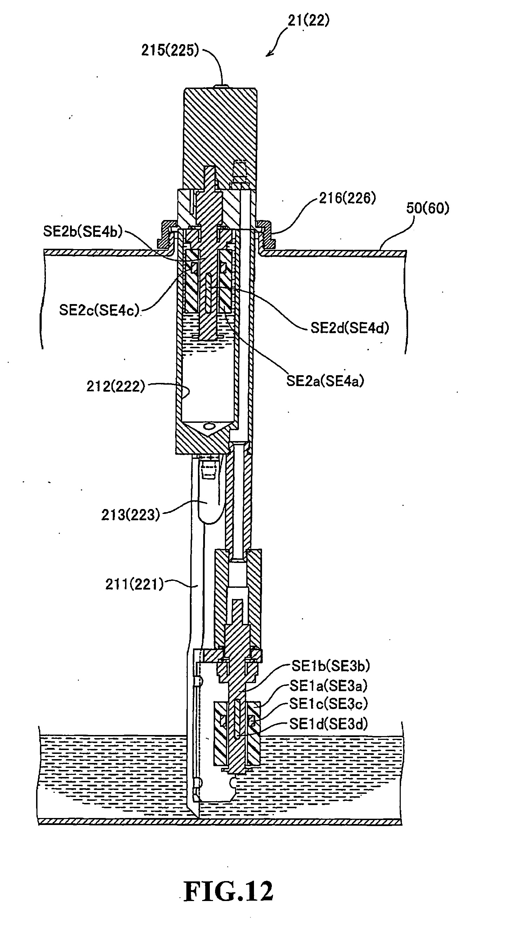

In a case where the controller 2a determines the state as the state (state 2) where the remaining volume of the cleaning solution in the first tank 50 is high, the remaining volume of the cleaning solution in the first tank 50 decreases as the controller 2a controls a suction operation so that the cleaning solution suction section 20 is driven. As is shown in FIG. 12, in a case where the remaining volume of the cleaning solution in the first tank 50 reaches the first fluid volume described above, the float section SE1a of the lower float sensor SE1 is moved to the predetermined position, and the lower float sensor SE1 switches from an OFF state to an ON state. Because the chamber 212 is still filled with the cleaning solution, the upper float sensor SE2 is maintained in an OFF state. In a case as described above where the lower float sensor SE1 configured to detect whether the fluid volume has reached the first fluid volume, which is the minimum volume up to which it is possible to complete the analyses on the specimens in the middle of analysis, is in an ON state and the upper float sensor SE2 configured to detect whether the fluid volume has reached the second fluid volume, which is the minimum volume up to which air bubbles are not mixed into the liquid, is in an OFF state, the controller 2a is configured to determine the state of the first tank 50 as a state (state 3) where the remaining volume of the cleaning solution is low.

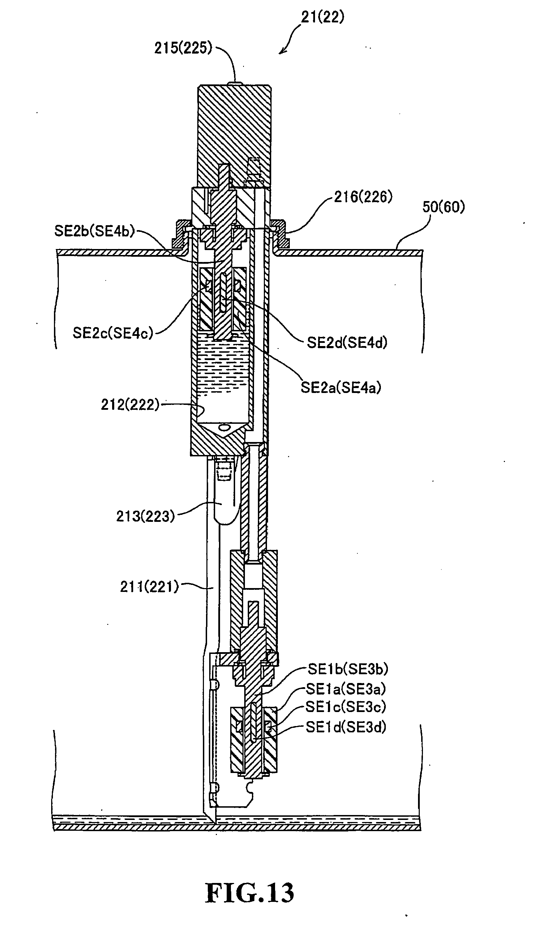

When the liquid level of the cleaning solution comes closer to the vicinity of the bottom section of the first tank 50 as the controller 2a continues to control the suction operation so that the cleaning solution suction section 20 is driven, air is taken into the chamber 212 from the intake nozzle 211. In association with this, a fluid volume of the cleaning solution in the chamber 212 starts to decrease, and as is shown in FIG. 13, when the remaining volume of the cleaning solution in the first tank 50 reaches the second fluid volume described above, the float section SE2a of the upper float sensor SE2 is moved to the predetermined position, and the upper float sensor SE2 switches from an OFF state to an ON state. In this instance, because a small volume of the cleaning solution remains in the chamber 212, it is a state where no air is taken into the connection tube 213 connected to the bottom section of the chamber 212. In a case as described above where the lower float sensor SE1 configured to detect whether the fluid volume has reached the first fluid volume, which is the minimum volume up to which it is possible to complete the analyses on the specimens in the middle of analysis, is in an ON state and the upper float sensor SE2 configured to detect whether the fluid volume has reached the second fluid volume, which is the minimum volume up to which air bubbles are not mixed into the liquid, is in an ON state, the controller 2a is configured to determine the state of the first tank 50 as a state (state 4) where there is no remaining volume of the cleaning solution.

The controller 2a is also configured to determine a remaining volume of the cleaning solution as to the state of the second tank 60 according to the four states of the cleaning solution intake section 22 described above.

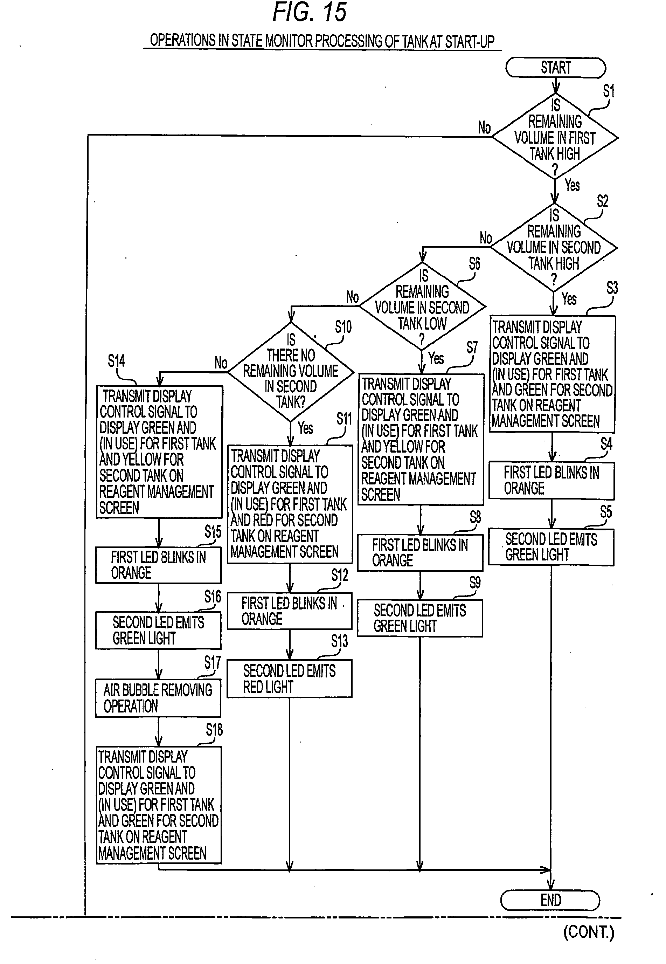

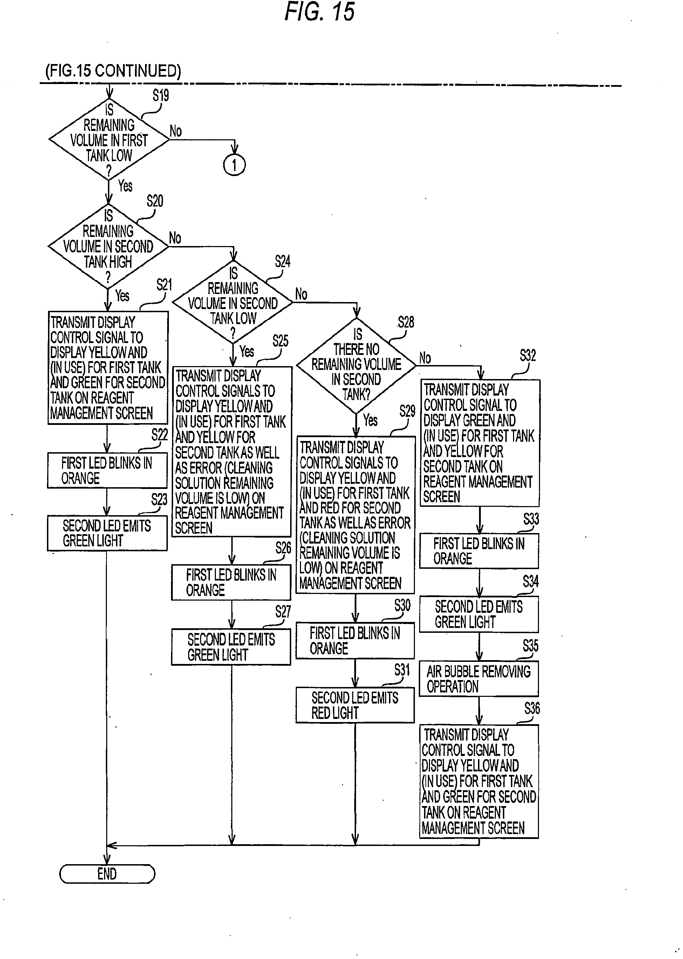

In addition, the controller 2a is configured to perform a cleaning solution intake operation and an air bubble removing operation for the respective first tank 50 and second tank 60 according to the combinations of the four states of the first tank 50 and the second tank 60 described above. This will be described more concretely along operation flows of FIG. 15, FIG. 16 and FIG. 24 described below.

In this embodiment, the cleaning solution is used at plural sections in the measurement mechanism section 2. However, a description will be given herein to a case where the cleaning solution stored in two tanks, the first tank 50 and the second tank 60, is used in the cuvette processing section 18 described above.

As is shown in FIG. 14, the first tank 50 of the cleaning solution is connected to the cuvette processing section 18 by the cleaning solution channel tube 24 via the solenoid valve V1 and it is also connected to the waste liquid chamber 26 by the air bubble channel tube 25 via the solenoid valve V2. Likewise, the second tank 60 is connected to the cuvette processing section 18 by the cleaning solution channel tube 24 via the solenoid valve V3 and it is also connected to the waste liquid chamber 26 by the air bubble channel tube 25 via the solenoid valve V4. These four solenoid valves V1 through 4 are configured to be switched by the controller 2a so as to open or close their respective channels. It is thus possible to create a state where the cleaning solution is allowed to reach the cuvette processing section 18 from the first tank 50 and the second tank 60 or a state where the cleaning solution is not allowed to reach the cuvette processing section 18. It is also possible to create a state where air inside the chambers 212 and 222 is allowed to reach the waste liquid chamber 26 or a state where air is not allowed to reach the waste liquid chamber 26.

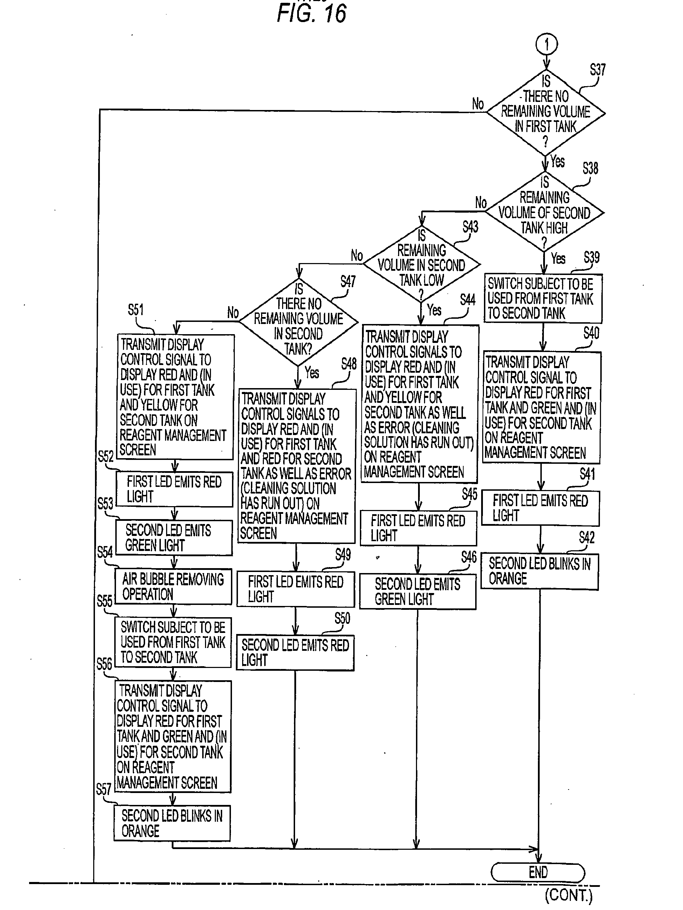

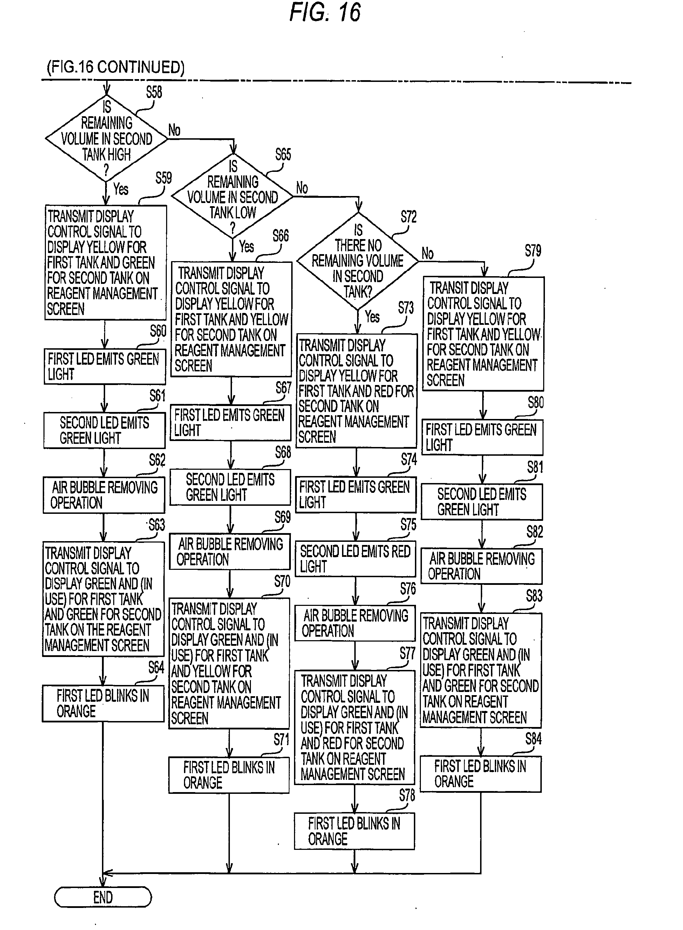

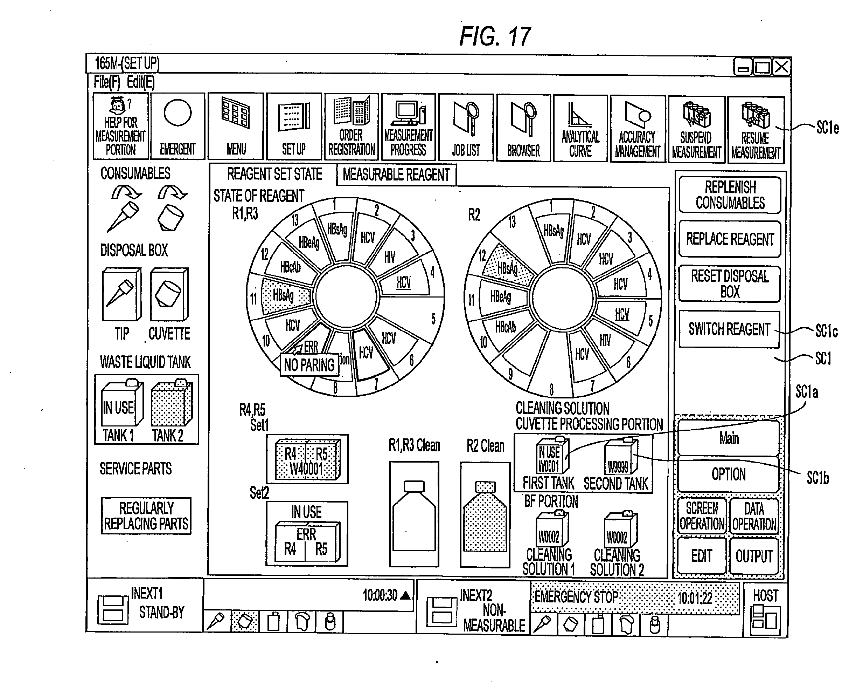

FIG. 15 and FIG. 16 are flowcharts detailing a state monitor processing operation of the cleaning solution tanks at the start-up of the immune analyzer according to one embodiment of the invention. FIG. 17 through FIG. 23 are views used to describe the state monitor processing operation of the cleaning solution tanks at the start-up of the immune analyzer according to one embodiment of the invention. The state monitor processing operation of the first tank 50 and the second tank 60 of the cleaning solution at the start-up of the immune analyzer 1 according to this embodiment will now be described with reference to FIG. 9 and FIG 15 through FIG. 23. In the description of the operation below, the controller 2a determines the states of the respective tanks according to the four states set forth in FIG. 9. Also, in the description of the operation below, a description will be given to a case where the subject to be used is the first tank 50 of the cleaning solution. In a case where the subject to be used is the second tank 60, operations are the same as in the description below except that the first tank 50 and the second tank 60 are replaced with each other.

Initially, when the user starts the immune analyzer 1, whether a remaining volume of the cleaning solution in the first tank 50 is high is determined in Step S1. To be more concrete, whether the state of the first tank 50 is the state 2 set forth in FIG. 9 is determined by the controller 2a according to the state of the lower float sensor SE1 and the state of the upper float sensor SE2. In a case where the remaining volume is high, whether a remaining volume of the cleaning solution in the second tank 60 is high is determined in Step S2 in the same manner as with the first tank 50.

In a case where the remaining volume of the cleaning solution in the second tank 60 is also high, a display control signal is transmitted to the control device 4 by the controller 2a in Step S3 so that a predetermined display is shown on a reagent management screen SC1 (see FIG. 17) that is displayed on the display section 4b of the control device 4. To be more concrete, as is shown in FIG. 17, a display control signal is transmitted by the controller 2a so that a first tank mark SC1a for the cleaning solution to be used in the cuvette processing section 18 is displayed in green with an indication of "in use" and a second tank mark SC1b is displayed in green.

Herein, the reagent management screen SC1 shown in FIG. 17 is displayed on the display section 4b of the control device 4 to enable the user to easily recognize the states of the reagents and the cleaning solution used at the respective sections in the measurement mechanism section 2. For example, regarding the two tanks of the cleaning solution used in the cuvette processing section 18, the first tank 50 and the second tank 60, the state of each tank is displayed so that the user can recognize the states by display statuses of the first tank mark SC1a and the second tank mark SC1b, respectively. In addition, the lot numbers of the respective tanks are displayed on the first tank mark SC1a and the second tank mark SC1b.

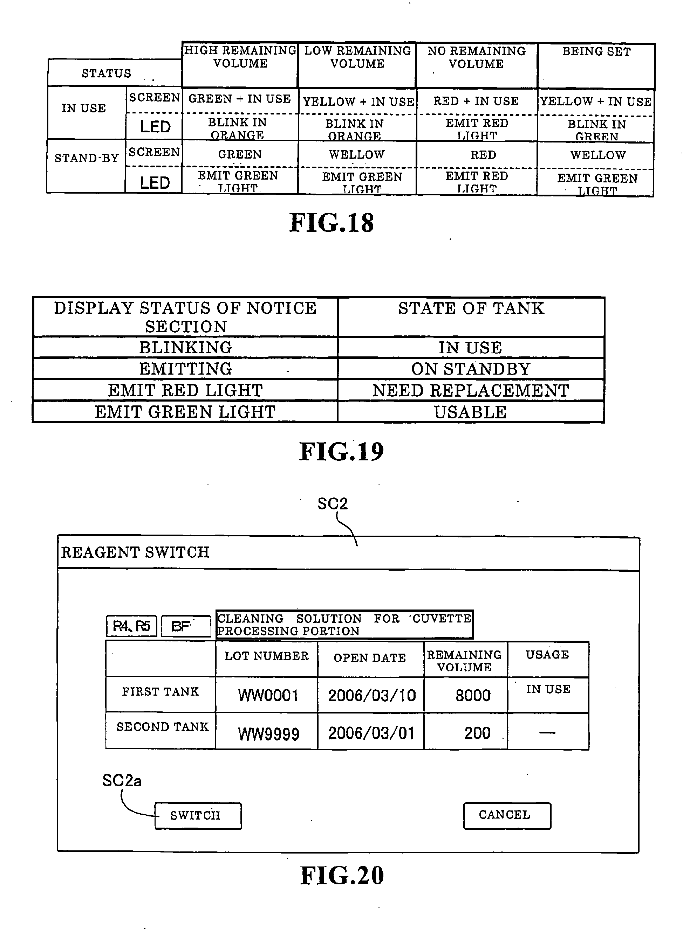

The states of the first tank 50 and the second tank 60 are also displayed in the notice sections 215 and 225 of the cleaning solution intake sections 21 and 22 provided to the respective tanks by display statuses corresponding to the first tank mark SC1a and the second tank mark SC1b on the reagent management screen SC1. As is set forth in FIG. 18, a concrete correspondence is as follows. That is, in a case where the first tank 50 is in use, the first tank mark SC1a on the reagent management screen SC1 is displayed in green with an indication of "in use" when the remaining volume is high whereas the notice section 215 is displayed to blink in orange. In a case where the remaining volume is low, the first tank mark SC1a is displayed in yellow with an indication of "in use" whereas the notice section 215 is displayed to blink in orange. The notice section 215 is displayed in corresponding display statuses in other states, too. The relation between the second tank mark SC1b and the notice section 225 in the cleaning solution intake section 22 is the same as described above.

In this embodiment, as shown in FIG. 19, the blinking of the notice sections 215 and 225 indicates that the corresponding tanks are "in use" (the subject to be used) and the emitting thereof indicates that the corresponding tanks are "on standby" (not the subject to be used). Also, in a case where the notice sections 215 and 225 emit red light, it indicates that there is no remaining volume of the cleaning solution in the tank and the user needs to replace with new tank. Accordingly, when the user replaces the tanks, the user is able to recognize easily which tank needs to be replaced even when plural tanks are present. In a case where the notice sections 215 and 225 emit green light, it indicates that the cleaning solution is remained in the corresponding tanks with a volume capable of being sucked and the corresponding tanks can be used.

As will be described below, as to which one of the first tank 50 and the second tank 60 is to be used, switching is made automatically by the controller 2a in response to the states of the respective tanks. Alternatively, the user is able to switch the tanks manually. A reagent switch screen SC2 shown in FIG. 20 is displayed on the display section 4b as the user depresses a reagent switch button SC1c on the reagent management screen SC1. It is possible to switch the tank to be used from the tank currently used to the other tank as the user depresses a switch button SC2a on the reagent switch screen SC2. Hence, the tank from which the cleaning solution is to be taken in can be switched manually by the user. The lot number, the opened date, the remaining volume, and whether in use or not are displayed on the reagent switch screen SC2 for each tank.

In Step S4, the LED 215 is displayed to blink in orange according to the correlation set forth in FIG. 18 and the LED 225 emits green light in Step S5. Thereafter, the operation is ended.

Also, in a case where it is found in Step S2 that the remaining volume in the second tank 60 is not high, whether the remaining volume in the second tank 60 is low is determined in Step S6. In a case where the remaining volume is low, a display control signal is transmitted by the controller 2a in Step S7 so that the first tank mark SC1a is displayed in green with an indication of "in use" and the second tank mark SC1b is displayed in yellow on the reagent management screen SC1. Subsequently, the LED 215 is displayed to blink in orange in Step S8 and the LED 225 emits green light in Step S9. Thereafter, the operation is ended.

In a case where it is found in Step S6 that the remaining volume in the second tank 60 is not low, whether there is no remaining volume in the second tank 60 is determined in Step S10. In a case where there is no remaining volume, a display control signal is transmitted by the controller 2a in Step S11 so that the first tank mark SC1a is displayed in green with an indication of "in use" and the second tank mark SC1b is displayed in red on the reagent management screen SC1. Subsequently, the LED 215 is displayed to blink in orange in Step S12 and the LED 225 emits red light in Step S13. Thereafter, the operation is ended.

In a case where it is found in Step S10 that not all the remaining volume in the second tank 60 is used, a display control signal is transmitted by the controller 2a in Step S14 so that the first tank mark SC1a is displayed in green with an indication of "in use" and the second tank mark SC1b is displayed in yellow on the reagent management screen SC1. The case in Step S10 where not all the remaining volume in the second tank 60 is used referred to herein is a case where the controller 2a determines that the second tank 60 is in a state where the cleaning solution intake section 22 is being set (see FIG. 9 and FIG. 10). Subsequently, the LED 215 is displayed to blink in orange in Step S15 and the LED 225 emits green light in Step S16. Thereafter, in Step S17, the air bubble suction section 23 and the solenoid valves V1 through 4 are controlled by the controller 2a so that air inside the chamber 222 of the cleaning solution intake section 22 on the second tank 60 side is removed. After the chamber 222 is filled with the cleaning solution by this air bubble removing operation, a display control signal is transmitted by the controller 2a in Step S18 so that the first tank mark SC1a is displayed in green with an indication of "in use" and the second tank mark SC1b is displayed in green on the reagent management screen SC1. Thereafter, the operation is ended.

In a case where it is found in Step S1 that the remaining volume in the first tank 50 is not high, whether the remaining volume in the first tank 50 is low is determined in Step S19. In a case where the remaining volume is low, whether the remaining volume in the second tank 60 is high is determined in Step S20. In a case where the remaining volume is high, a display control signal is transmitted by the controller 2a in Step S21 so that the first tank mark SC1a is displayed in yellow with an indication of "in use" and the second tank mark SC1b is displayed in green on the reagent management screen SC1. Subsequently, the LED 215 is displayed to blink in orange in Step S22 and the LED 225 emits green light in Step S23. Thereafter, the operation is ended.

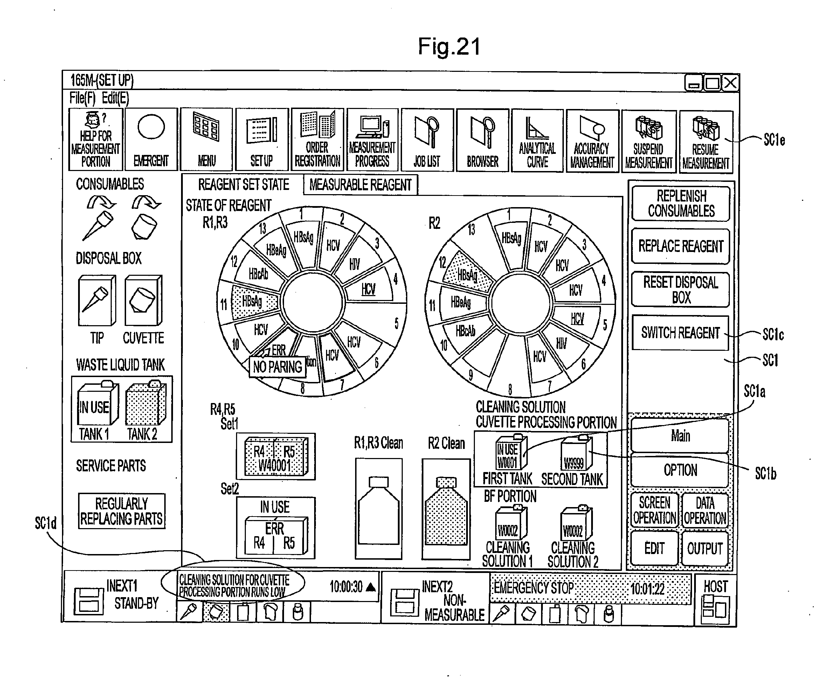

In a case where it is found in Step S20 that the remaining volume in the second tank 60 is not high, whether the remaining volume in the second tank 60 is low is determined in Step S24. In a case where the remaining volume is low, a display control signal is transmitted by the controller 2a in Step S25 so that the first tank mark SC1a is displayed in yellow with an indication of "in use" and the second tank mark SC1b is displayed in yellow on the reagent management screen SC1. In this instance, a display control signal is transmitted by the controller 2a so that, as is shown in FIG. 21, a message informing that the cleaning solution for the cuvette processing section runs low is displayed in a display region SC1d on the reagent management screen SC1. Subsequently, the LED 215 is displayed to blink in orange in Step S26 and the LED 225 emits green light in Step S27. Thereafter, the operation is ended.

In a case where it is found in Step S24 that the remaining volume in the second tank 60 is not low, whether there is no remaining volume in the second tank 60 is determined in Step S28. In a case where there is no remaining volume, a display control signal is transmitted by the controller 2a in Step S29 so that the first tank mark SC1a is displayed in yellow with an indication of "in use" and the second tank mark SC1b is displayed in red on the reagent management screen SC1. As is described above, in this instance, a display control signal is transmitted by the controller 2a so that a message informing that the cleaning solution for the cuvette processing section runs low is displayed in the display region SC1d on the reagent management screen SC1 (see FIG. 21). Subsequently, the LED 215 is displayed to blink in orange in Step S30 and the LED 225 emits red light in Step S31. Thereafter, the operation is ended.

In a case where it is found in Step S28 that not all the remaining volume in the second tank 60 is used, a display control signal is transmitted by the controller 2a in Step S32 so that the first tank mark SC1a is displayed in green with an indication of "in use" and the second tank mark SC1b is displayed in yellow on the reagent management screen SC1. Subsequently, the LED 215 is displayed to blink in orange in Step S33 and the LED 225 emits green light in Step S34. Thereafter, in Step S35, the air bubble suction section 23 and the solenoid valves V1 through 4 are controlled by the controller 2a in such a manner that air inside the chamber 222 of the cleaning solution intake section 22 on the second tank 60 is removed. When the chamber 222 is filled with the cleaning solution by the air bubble removing operation, a display control signal is transmitted by the controller 2a in Step S36 so that the first tank mark SC1a is displayed in yellow with an indication of "in use" and the second tank mark SC1b is displayed in green on the reagent management screen SC1. Thereafter, the operation is ended.

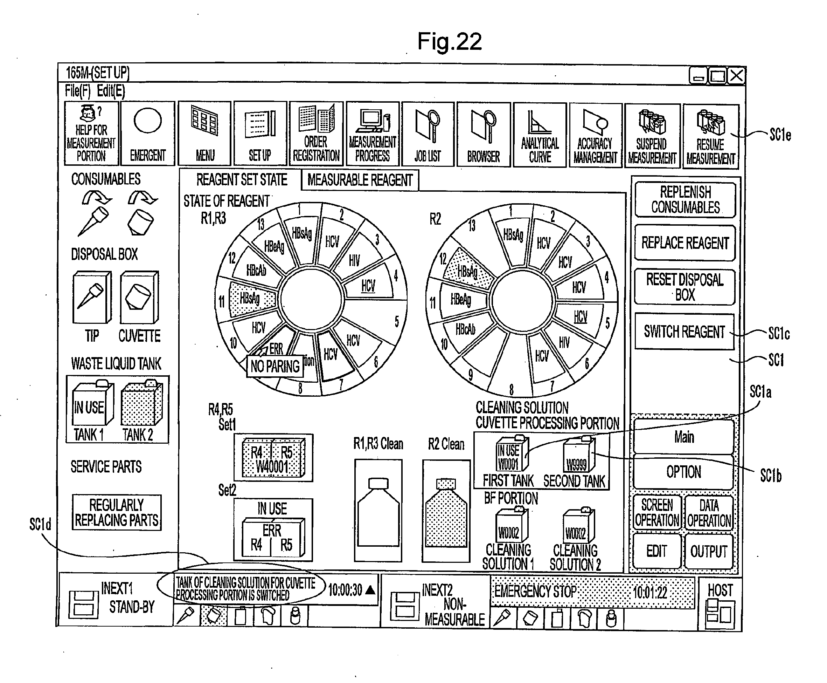

In a case where it is found in Step S19 that the remaining volume in the first tank 50 is not low, whether there is no remaining volume in the first tank 50 is determined in Step S37 shown in FIG. 16. In a case where there is no remaining volume, whether the remaining volume in the second tank 60 is high is determined in Step S38. In a case where the remaining volume in the second tank 60 is high, the subject to be used is switched to the second tank 60 from the first tank 50 by the controller 2a in Step S39. In other words, the intake operation of the cleaning solution in the first tank 50 by the cleaning solution intake section 21 is stopped and the intake operation of the cleaning solution in the second tank 60 by the cleaning solution intake section 22 is started. Subsequently, a display control signal is transmitted by the controller 2a in Step S40 so that the first tank mark SC1a is displayed in red and the second tank mark SC1b is displayed in green with an indication of "in use" on the reagent management screen SC1. In this instance, a display control signal is transmitted by the controller 2a so that, as is shown in FIG. 22, a message informing that the tank of the cleaning solution for the cuvette processing section was switched is displayed in the display region SC1d on the reagent management screen SC1. Subsequently, the LED 215 emits red light in Step S41 and the LED 225 is displayed to blink in orange in Step S42. Thereafter, the operation is ended.

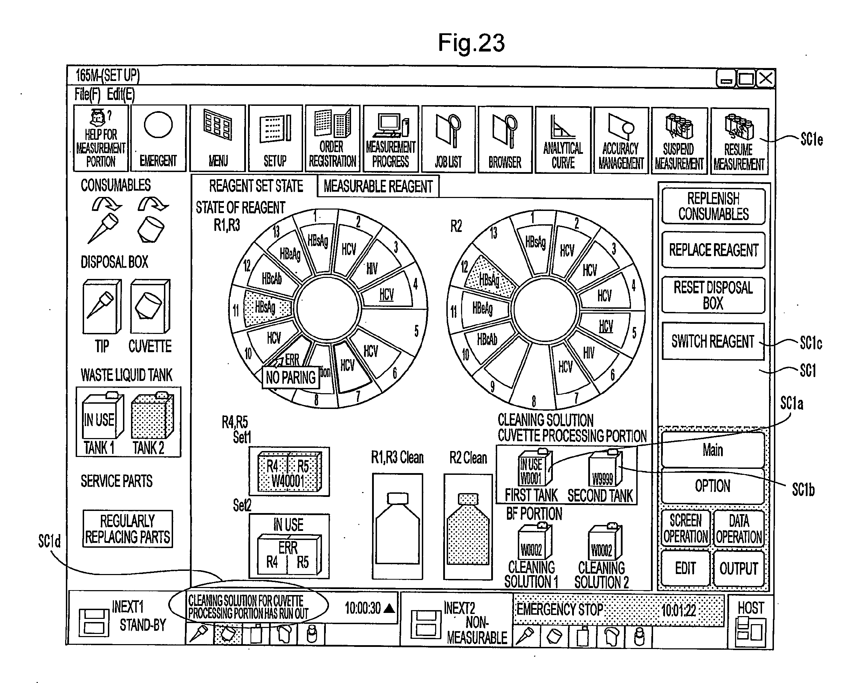

In a case where it is found in Step S38 that the remaining volume in the second tank 60 is not high, whether the remaining volume in the second tank 60 is low is determined in Step S43. In a case where the remaining volume is low, a display control signal is transmitted by the controller 2a in Step S44 so that the first tank mark SC1a is displayed in red with an indication of "in use" and the second tank mark SC1b is displayed in yellow on the reagent management screen SC1. In this instance, a display control signal is transmitted by the controller 2a so that, as is shown in FIG. 23, a message informing that the cleaning solution for the cuvette processing section has run out is displayed in the display region SC1d on the reagent management screen SC1. Subsequently, the LED 215 emits red light in Step S45 and the LED 225 emits green light in Step S46. Thereafter, the operation is ended.

In a case where it is found in Step S43 that the remaining volume in the second tank 60 is not low, whether there is no remaining volume in the second tank 60 is determined in Step S47. In a case where there is no remaining volume, a display control signal is transmitted by the controller 2a in Step S48 so that the first tank mark SC1a is displayed in red with an indication of "in use" and the second tank mark SC1b is displayed in red on the reagent management screen SC1. As with the description above, in this instance, a display control signal is transmitted by the controller 2a so that a message informing that the cleaning solution for the cuvette processing section has run out is displayed in the display region SC1d on the reagent management screen SC1 (see FIG. 23). Subsequently, the LED 215 emits red light in Step S49 and the LED 225 emits red light in Step S50. Thereafter, the operation is ended.

In a case where it is found in Step S47 that not all the remaining volume in the second tank 60 is used, a display control signal is transmitted by the controller 2a in Step S51 so that the first tank mark SC1a is displayed in red with an indication of "in use" and the second tank mark SC1b is displayed in yellow on the reagent management screen SC1. Subsequently, the LED 215 emits red light in Step S52 and the LED 225 emits green light in Step S53. Thereafter, the air bubble removing operation on the second tank 60 side is performed in Step S54. The subject to be used is then switched from the first tank 50 to the second tank 60 in Step S55. Subsequently, a display control signal is transmitted by the controller 2a in Step S56 so that the first tank mark SC1a is displayed in red and the second tank mark SC1b is displayed in green with an indication of "in use" on the reagent management screen SC1. In this instance, a display control signal is transmitted by the controller 2a so that, as is shown in FIG. 22, a message informing that the tank of the cleaning solution for the cuvette processing section was switched is displayed in the display section SC1d on the reagent management screen SC1. Also, the LED 225 of the cleaning solution intake section 22 on the second tank 60 side is displayed to blink in orange in Step S57 and the operation is ended.

In a case where it is found in Step S37 that there is no remaining volume in the first tank 50, whether the remaining volume in the second tank 60 is high is determined in Step S58. In a case where the remaining volume in the second tank 60 is high, a display control signal is transmitted by the controller 2a in Step S59 so that the first tank mark SC1a is displayed in yellow and the second tank mark SC1b is displayed in green on the reagent management screen SC1. Subsequently, the LED 215 emits green light in Step S60 and the LED 225 emits green light in Step S61. The air bubble removing operation on the first tank 50 side is then performed in Step S62. Subsequently, a display control signal is transmitted by the controller 2a in Step S63 so that the first tank mark SC1a is displayed in green with an indication of "in use" and the second tank mark SC1b is displayed in green on the reagent management screen SC1. Also, the LED 215 of the cleaning solution intake section 21 on the first tank 50 side is displayed to blink in orange in Step S64 and the operation is ended.

In a case where it is found in Step S58 that the remaining volume in the second tank 60 is not high, whether the remaining volume in the second tank 60 is low is determined in Step S65. In a case where the remaining volume in the second tank 60 is low, a display control signal is transmitted by the controller 2a in Step S66 so that the first tank mark SC1a is displayed in yellow and the second tank mark SC1b is displayed in yellow on the reagent management screen SC1. Subsequently, the LED 215 emits green light in Step S67 and the LED 225 emits green light in Step S68. Thereafter, the air bubble removing operation on the first tank 50 side is performed in Step S69, and a display control signal is transmitted by the controller 2a in Step S70 so that the first tank mark SC1a is displayed in green with an indication of "in use" and the second tank mark SC1b is displayed in yellow on the reagent management screen SC1. Also, the LED 215 of the cleaning solution intake section 21 on the first tank 50 side is displayed to blink in orange in Step S71 and the operation is ended.

In a case where it is found in Step S65 that the remaining volume in the second tank 60 is not low, whether there is no remaining volume in the second tank 60 is determined in Step S72. In a case where there is no remaining volume in the second tank 60, a display control signal is transmitted by the controller 2a in Step S73 so that the first tank mark SC1a is displayed in yellow and the second tank mark SC1b is displayed in red on the reagent management screen SC1. Subsequently, the LED 215 emits green light in Step S74 and the LED 225 emits red light in Step S75. Thereafter, the air bubble removing operation on the first tank 50 side is performed in Step S76, and a display control signal is transmitted by the controller 2a in Step S77 so that the first tank mark SC1a is displayed in green with an indication of "in use" and the second tank mark SC1b is displayed in red on the reagent management screen SC1. Also, the LED 215 of the cleaning solution intake section 21 on the first tank 50 side is displayed to blink in orange in Step S78 and the operation is ended.

In a case where it is found in Step S72 that not all the remaining volume in the second tank 60 is used, a display control signal is transmitted by the control potion 2a in Step S79 so that the first tank mark SC1a is displayed in yellow and the second tank mark SC1b is displayed in yellow on the reagent management screen SC1. Subsequently, the LED 215 emits green light in Step S80 and the LED 225 emits green light in Step S81. Thereafter, the air bubble removing operation is performed for both the first tank 50 and the second tank 60'in Step S82, and a display control signal is transmitted by the controller 2a in Step S83 so that the first tank mark SC1a is displayed in green with an indication of "in use" and the second tank mark SC1b is displayed in green on the reagent management screen SC1. Also, the LED 215 of the cleaning solution intake section 21 on the first tank 50 side is displayed to blink in orange in Step S84 and the operation is ended.

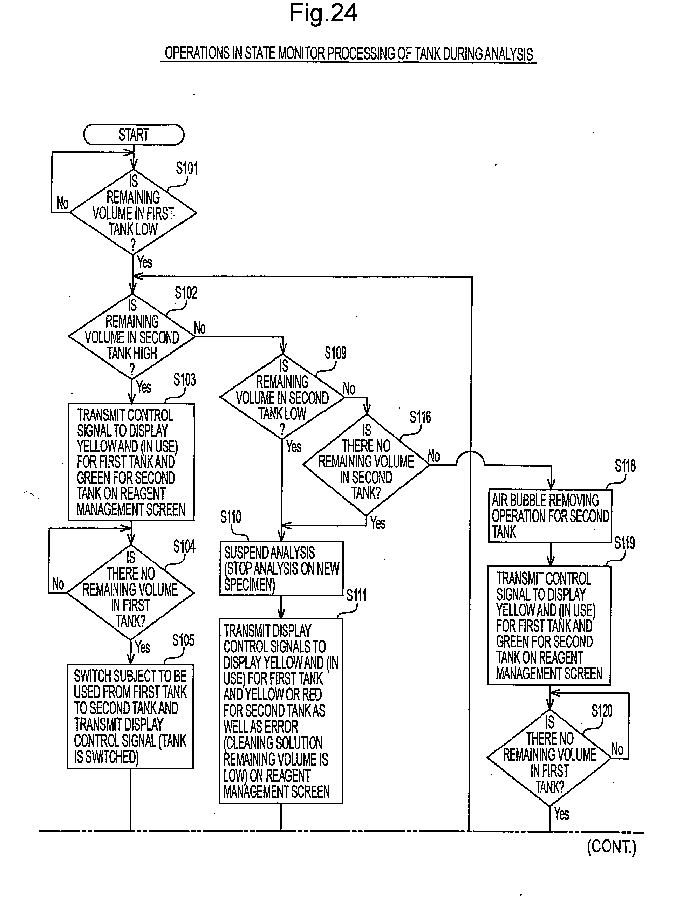

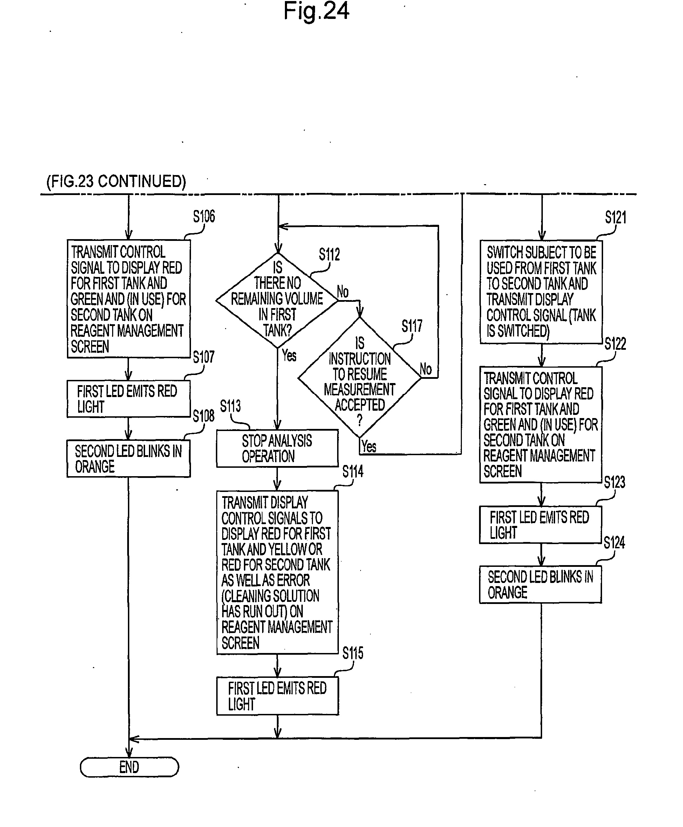

FIG. 24 is still another flowchart used to describe the state monitor processing operation of the cleaning solution tanks during the analysis processing by the immune analyzer according to one embodiment of the invention. The state monitor processing operation of the first tank 50 and the second tank 60 of the cleaning solution during the measurement by the immune analyzer 1 of this embodiment will now be described with reference to FIG. 17 and FIG. 21 through FIG. 24. Hereinafter, the operation will be described in a case where the first tank 50 of the cleaning solution is the subject to be used. In a case where the second tank 60 is the subject to be used, operations are the same as in the description below except that the first tank 50 and the second tank 60 are replaced with each other. Hereinafter, the operation will be described for the two tanks, the first tank 50 and the second tank 60. However, in actual operations, the operation detailed in FIG. 24 is performed continuously as new tanks are successively supplied by the user.

Initially, whether the remaining volume of the cleaning solution in the first tank 50 is low is determined in Step S101 and this determination is repeated until the remaining volume becomes low. In a case where the remaining volume is low, whether the remaining volume of the cleaning solution in the second tank 60 is high is determined in Step S102. In a case where the remaining volume in the second tank 60 is high, a display control signal is transmitted by the controller 2a in Step S103 so that the first tank mark SC1a is displayed in yellow with an indication of "in use" and the second tank mark SC1b is displayed in green on the reagent management screen SC1 (see FIG. 17). Subsequently, whether there is no remaining volume in the first tank 50 is determined in Step S104 and this determination is repeated until there is no remaining volume in the first tank 50.

In a case where there is no remaining volume, the subject to be used is switched from the first tank 50 to the second tank 60 by the controller 2a in Step S105. Also, in this instance, a display control signal is transmitted by the controller 2a so that, as is shown in FIG. 21, a message informing that the tank of the cleaning solution for the cuvette processing section was switched is displayed in the display region SC1d on the reagent management screen SC1. Subsequently, a display control signal is transmitted by the controller 2a in Step S106 so that the first tank mark SC1a is displayed in red and the second tank mark SC1b is displayed in green with an indication of "in use" on the reagent management screen SC1. Also, the LED 215 emits red light in Step S107 and the LED 225 is displayed to blink in orange in Step S108. Thereafter, the operation is ended.

In a case where it is found in Step S102 that the remaining volume in the second tank 60 is not high, whether the remaining volume in the second tank 60 is low is determined in Step S109. In a case where the remaining volume is low, the analysis is suspended in Step S110. To be more concrete, the respective sections of the measurement mechanism section 2 are controlled by the controller 2a in such a manner that the analysis processing operation is continued for the specimens in the middle of the analysis processing alone without starting analyses on new specimens.

Meanwhile, in a case where it is found in Step S109 that the remaining volume in the second tank 60 is not low, whether there is no remaining volume in the second tank 60 is determined in Step S116. In a case where there is no remaining volume, the step proceeds to Step S110.

Subsequently, on the reagent management screen SC1, the first tank mark SC1a is displayed in yellow with an indication of "in use" in Step S111. Also, a display control signal is transmitted by the controller 2a so that the second tank mark SC1b is displayed in yellow in a case where the remaining volume in the second tank 60 is low while it is displayed in red in a case where there is no remaining volume in the second tank 60. In Step S112, whether there is no remaining volume in the first tank 50 is determined, and in a case where there is no remaining volume, all the analysis processing operations in the measurement mechanism section 2 are stopped in Step S113. Subsequently, a display control signal is transmitted by the controller 2a in S114 so that, on the reagent management screen SC1, the first tank mark SC1a is displayed in red and the second tank mark SC1b is displayed in yellow in a case where the remaining volume in the second tank 60 is low while the second tank mark SC1b is displayed in red in a case where there is no remaining volume in the second tank 60. In this instance, a display control signal is transmitted by the controller 2a so that, as is shown in FIG. 23, a message informing that the cleaning solution for the cuvette processing section has run out is displayed in the display region SC1d on the reagent management screen SC1. The LED 215 then emits red light in Step S115.

In a case where it is found in Step S112 that not all the remaining volume in the first tank 50 is used, whether an instruction to resume the measurement from the user is accepted is determined in Step S117. The instruction to resume the measurement is issued as the user depresses a measurement start button SC1e on the reagent management screen SC1 shown in FIG. 21. The user is requested to replace the second tank 60 with a new tank by an error display in the display region SC1d on the reagent management screen SC1 shown in FIG. 20. When the instruction to resume the measurement is issued by the user after the tank replacing work, the operation is shifted to the one in Step S102 so as to determine again whether the remaining volume in the second tank 60 is high. In a case where there is no instruction to resume the measurement, the flow proceeds to Step S112.

In a case where it is found in Step S116 that not all the remaining volume in the second tank 60 is used, the air bubble removing operation of the second tank 60 is performed in Step S118. A display control signal is then transmitted by the controller 2a in Step S119 so that the first tank mark SC1a is displayed in yellow with an indication of "in use" and the second tank mark SC1b is displayed in green on the reagent management screen SC1. Subsequently, whether there is no remaining volume in the first tank 50 is determined in Step S120 and this determination is repeated until there is no remaining volume. In a case where there is no remaining volume, the subject to be used is switched from the first tank 50 to the second tank 60 in Step S121. Also, in this instance, a display control signal is transmitted by the controller 2a so that, as is shown in FIG. 22, a message informing that the tank of the cleaning solution for the cuvette processing section was switched is displayed in the display region SC1d on the reagent management screen SC1. Subsequently, a display control signal is transmitted by the controller 2a in Step S122 so that the first tank mark SC1a is displayed in red and the second tank mark SC1b is displayed in green with an indication of "in use" on the reagent management screen SC1. Also, the LED 215 emits red light in Step S123 and the LED 225 is displayed to blink in orange in Step S124. Thereafter, the operation is ended.

As described above, in this embodiment, by providing in the cleaning solution intake section 21, the lower float sensor SE1 and the upper float sensor SE2 configured to detect a fluid volume of the cleaning solution of the first tank 50 and the notice section 215 notifying that the first tank 50 needs to be replaced in response to detection results of the lower float sensor SE1 and the upper float sensor SE2, the user is able to recognize easily that the first tank 50 needs to be replaced by means of the notice section 215 provided in the cleaning solution intake section 21. Furthermore, by providing the notice section 215 in the cleaning solution intake section 21 which is set in the first tank 50, the user is able to identify easily which tank needs to be replaced even when plural tanks containing the same cleaning solution are present by looking for the cleaning solution intake section 21 in which the notice section notifying the need of replacement is provided. Accordingly, the replacing work of the first tank 50 can be easily performed even when plural tanks are provided.

Furthermore, in this embodiment, by configuring the notice section 215 such that it can emit or blink and notifies to identify whether the first tank 50 is in use or on standby by the emitting and blinking, the user is able to identify two display statuses of the emitting and blinking of the notice section 215 to thereby visually recognize whether the first tank 50 is in use or not with ease.

Furthermore, in this embodiment, the display section 4b is provided and the control section 2a is configured to control the display section 4b in addition to the notice section 215 so as to notify that the first tank 50 needs to be replaced in response to the detection results of the lower float sensor SE1 and the upper float sensor SE2, so that the user is able to identify that the first tank 50 needs to be replaced by the display section 4b in addition to the notice section 215.

It should be appreciated that the embodiment disclosed herein is a mere example in all respects and is not restrictive. The scope of the invention is limited not by the description of the embodiment above but solely by the scope of claims appended herein, and definitions equivalents to the scope of claims and all the changes within the scope are included in the invention.

For example, the immune analyzer 1 was described as an example of the specimen analyzer in the embodiment above. The invention, however, is not limited to this example and the invention is also applicable to other specimen analyzers as long as it is a specimen analyzer using a reagent or a cleaning solution.

Also, the cleaning solution intake section that takes in the cleaning solution for the cuvette processing section was described as an example of the intake section in the embodiment above. The invention, however, is not limited to this example, and the invention is also applicable to an intake section that takes in a cleaning solution or a reagent used at other sections in the measurement mechanism section.

The float sensor was described as an example of the fluid volume sensor in the embodiment above. The invention, however, is not limited to this example, and other sensors are also available as long as it is a sensor capable of detecting a volume of the liquid.

The embodiment above described a case where the controller 2a of the measurement mechanism section 2 performs the state monitor processing operation for each tank. The invention, however, is not limited to this case, and it may be configured in such a manner that the controller 4a of the control device 4 performs the state monitor processing operation for each tank.

The above embodiment describes a case where the notice section 215 is constituted by LEDs. The invention, however, is not limited to this case, and the notice section may have configurations in which notification is performed by voice or other light-emitting elements if the use is able to recognize the notice from the notice section.

## Claims

1. A specimen analyzer, comprising:
a liquid suction assembly;
a measurement section for measuring a specimen; and
a connection section for connecting the liquid suction assembly and the measurement section,
wherein the liquid suction assembly comprises:
a suction nozzle, disposed inside a liquid container storing liquid used for measurement of the specimen, for sucking the liquid in the liquid container;
a fluid volume sensor for detecting whether a predetermined volume of the liquid remains in the liquid container; and
a notice section for notifying that the liquid in the liquid container is smaller than the predetermined volume.

2. The specimen analyzer according to claim 1, further comprising:
a control section for determining whether the liquid in the liquid container is smaller than the predetermined volume based on a detection result of the fluid volume sensor, and controlling the notice section according to the determination result.

3. The specimen analyzer according to claim 2, wherein
the control section determines whether the liquid is sucked through the suction nozzle, and controls the notice section to notify that the liquid container is in use.

4. The specimen analyzer according to claim 3, wherein
the notice section comprises a light-emitting section and the light-emitting section blinks to notify that the liquid container is in use.

5. The specimen analyzer according to claim 2, wherein
the control section determines whether the liquid in the liquid container is in a state capable of being sucked through the suction nozzle, and controls the notice section to notify that the liquid container is in a state capable of being used.

6. The specimen analyzer according to claim 5, wherein
the notice section comprises a light-emitting section that is able to emit a plurality of colors and notifies that the liquid container is in the state capable of being used by the color emitted from the light-emitting section.

7. The specimen analyzer according to any one of claims 2 to 6, wherein
the notice section comprises a light-emitting section that is able to emit a plurality of colors and the control section controls the notice section to notify a state of the liquid container by the display status of the light-emitting section.

8. The specimen analyzer according to claim 7, wherein
the display status of the light-emitting section is represented by color selection and blinking state of light.

9. The specimen analyzer according to any one of claims 1 to 8, wherein:
the notice section comprises a light-emitting diode.

10. The specimen analyzer according to any one of claims 2 to 9, further comprising:
a display,
wherein the control section determines whether the liquid in the liquid container is smaller than the predetermined volume and further controls the display to display that the liquid in the liquid container is smaller than the predetermined volume according to the determination result.

11. The specimen analyzer according to claim 10, wherein:
the control section controls the display to perform at least three kinds of display according to a remaining volume of the liquid in the liquid container.

12. The specimen analyzer according to any one of claims 1 to 11, wherein:
the liquid suction assembly includes first and second liquid suction assemblies;
each of the first and second liquid suction assemblies comprises the suction nozzle, the fluid volume sensor, and the notice section; and
the control section controls each of the notice sections.

13. The specimen analyzer according to any one of claims 1 to 12, further comprising:
a lid member for closing a suction port provided on the liquid container,
wherein the notice section is disposed on the lid member.

14. The specimen analyzer according to any one of claims 1 to 13, wherein:
the notice section comprises a light source and the light source is disposed such that a light-emitting surface thereof faces upward.

15. A liquid suction assembly connected to a measurement section for measuring a specimen, comprising:
a suction nozzle, disposed inside a liquid container storing liquid used for measurement of the specimen, for sucking the liquid in the liquid container;
a fluid volume sensor for detecting whether a predetermined volume of the liquid remains in the liquid container; and
a notice section for notifying that the liquid in the liquid container is smaller than a predetermined volume.
